# EUROPÄISCHE PATENTANMELDUNG

(11) **EP 1 116 979 A2**
(43) Veröffentlichungstag der Anmeldung: **18.07.2001**
(21) Anmeldenummer: 00127863.9
(22) Anmeldetag: 20.12.2000
(51) Int. Cl.: G02B 23/18

(54) **Augenmuschel für ein Fernglas**

(30) Priorität: 17.01.2000 DE 10001736
(71) Anmelder: Steiner-Optik GmbH, 95490 Mistelgau (DE)
(72) Erfinder: Seifert, Kuno, 95490 Mistelgau (DE)
(74) Vertreter: Schneck, Herbert, Dipl.-Phys., Dr.

(57) **Zusammenfassung**

Bei einer Augenmuschel für ein Fernglas, welche insbesondere dem Augenbereich des Benutzers weitgehend dicht anliegt, sind Luft-Durchtrittsöffnungen (10) vorgesehen.

## Beschreibung

Die Erfindung richtet sich auf eine insbesondere ergonomisch geformte Augenmuschel für ein Fernglas.

Derartige Augenmuscheln weisen einen Gesichts-Anlagebereich auf, der der Kopfform im Augenbereich angepaßt ist, so daß eine möglichst dichte Anlage erreicht wird, welche das Eintreten von die Beobachtung störendem Streulicht bzw. Fremdlicht verhindert. Als unerwünschter Nebeneffekt geht mit einer derartigen an sich vorteilhaften dichten Anlage einher, daß der Raum zwischen Augenmuschel, Auge und Okular nach außen weitgehend hermetisch abgeschlossen ist und deshalb die Gefahr besteht, daß die Okularlinse beschlägt.

Hiervon ausgehend liegt der Erfindung die Aufgabe zugrunde, eine ergonomisch geformte Augenmuschel so auszubilden, daß dieses Beschlagen weitgehend verhindert wird.

Diese Aufgabe wird erfindungsgemäß dadurch gelöst, daß an der Augenmuschel Durchtrittsöffnungen zum Belüften des Innenraums ausgebildet sind.

Vorzugsweise ist vorgesehen, daß die Luft-Durchtrittsöffnungen im Bereich oberhalb des Okulars im Abstand zueinander um die Augenmuschel herum verteilt angeordnet sind, wobei der durch die Luft-Durchtrittsöffnungen eintretende Luftstrom umgelenkt wird. Hierdurch wird erreicht, daß durch die Luft-Durchtrittsöffnungen kein Licht eindringen kann und daß andererseits die eintretende Luft nicht auf das Auge des Benutzers trifft.

Insbesondere kann mit Vorteil vorgesehen sein, daß der eintretende Luftstrom auf die Innenseite der Okularlinse umgelenkt wird, so daß diese zuverlässig beschlagfrei gehalten wird und der Luftstrom vom Auge des Benutzers weggeführt wird.

Um trotz Verstellung des Okulars zu erreichen, daß die Augenmuschel immer optimal dem Gesicht des Benutzers anliegt, kann diese relativ zum Okular verschwenkbar gelagert sein.

Wenn ein Fernglas mit erfindungsgemäßen Augenmuscheln im Freien benutzt wird, reicht in der Regel die dort vorhandene Luftbewegung aus, um einen ausreichenden Luftstrom zu erzeugen.

Demgegenüber kann erfindungsgemäß eine Zwangsbelüftung vorgesehen sein, um insbesondere den Anforderungen in sehr feuchten Gebieten oder bei der Benutzung in geschlossenen Räumen, wie beispielsweise in Wachtürmen, gerecht zu werden.

Eine derartige Zwangsbelüftung kann durch eine Art Gebläse realisiert werden oder durch eine Pumpwirkung aufgrund der Eigenelastizität der Augenmuscheln.

Nachfolgend wird die Erfindung anhand eines bevorzugten Ausführungsbeispiels in Verbindung mit der Zeichnung näher erläutert. Dabei zeigen:

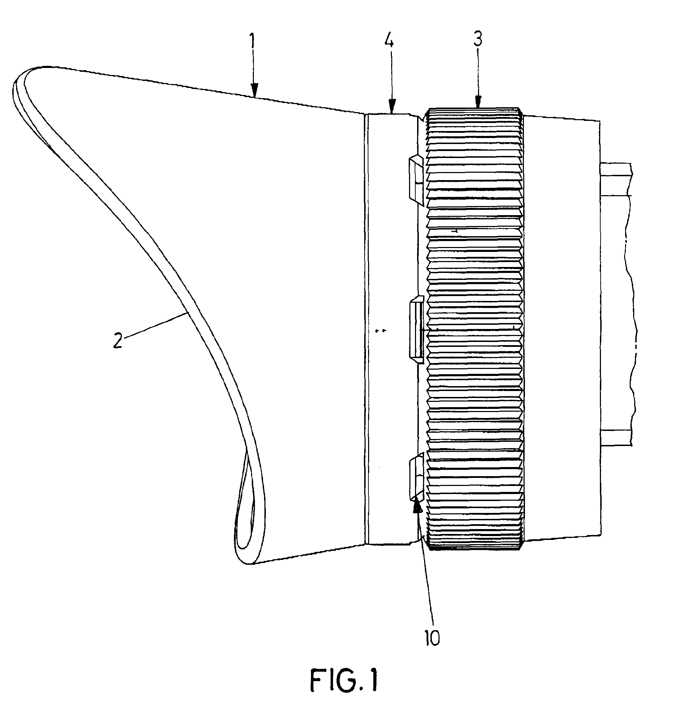

- Fig. 1: eine Seitenansicht einer erfindungsgemäßen Augenmuschel und
- Fig. 2: eine aufgebrochene, geschnittene Darstellung der Augenmuschel nach Fig. 1.

Eine in der Zeichnung dargestellte Augenmuschel 1 besteht aus einem verhältnismäßig weichen, gummiartigen Material und weist im Anlagebereich 2 eine Konfiguration auf, welche dem Verlauf um das menschliche Auge folgt. An einem Fernglas sind üblicherweise an jedem von zwei Okularen 3 derartige Augenmuscheln 1 befestigt.

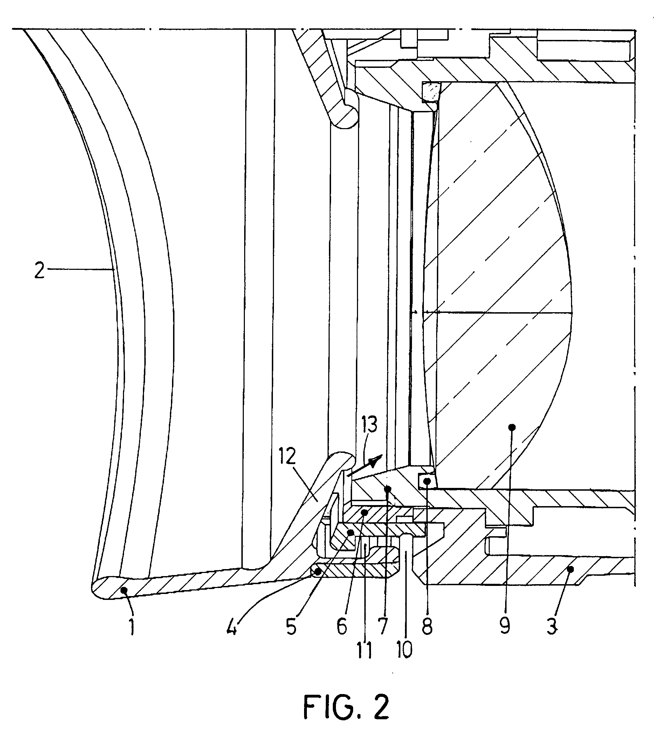

Die Befestigung der Augenmuschel 1 am Okular 3 ist insbesondere aus Fig. 2 erkennbar. Danach schließt an die Augenmuschel 1 ein Spannring 4 an, innerhalb dessen ein Mitnehmer 5 und ein Schraubring 6 vorgesehen sind. An einer Okularfassung 7 ist über einen 0-Ring 8 eine Okularlinse 9 angeordnet.

Eine Mehrzahl von Luft-Durchtrittsöffnungen 10 sind am Fuß des Spannrings 4 oberhalb des Okulars 3 im Abstand voneinander angeordnet.

Die Luft tritt von außen durch die Durchtrittsöffnungen 10 ein, wird dann in der Zeichnung senkrecht nach oben über einen Kanal 11 abgelenkt und gelangt von diesem Kanal 11 in einen Bereich unterhalb eines nach innen vorkragenden Ringansatzes 12 der Augenmuschel 1 und von dort in Richtung des Pfeils 13 auf die Okularlinse 9, so daß diese beschlagfrei gehalten wird. Durch die Umlenkung des Luftstromes wird verhindert, daß der Luftstrom direkt auf das Auge trifft und das Auge durch Luftzug beeinträchtigt wird.

Um zu erreichen, daß unabhängig von der Einstellung des Okulars 3 der Anlagebereich 2 der Augenmuschel 1 immer korrekt dem Gesicht des Betrachters anliegt, ist die Augenmuschel 1 relativ zum Okular 3 dreheinstellbar gelagert.

## Patentansprüche

1. Augenmuschel für ein Fernglas, welche insbesondere dem Augenbereich des Benutzers weitgehend dicht anliegt, **dadurch gekennzeichnet,** daß Luft-Durchtrittsöffnungen (10) vorgesehen sind.

2. Augenmuschel nach Anspruch 1, **dadurch gekennzeichnet,** daß die Luft-Durchtrittsöffnungen (10) im Bereich oberhalb des Okulars (3) im Abstand zueinander um die Augenmuschel (1) herum verteilt angeordnet sind.

3. Augenmuschel nach Anspruch 1, **dadurch gekennzeichnet,** daß der durch die Luft-Durchtrittsöffnungen (10) eintretende Luftstrom umgelenkt wird.

4. Augenmuschel nach Anspruch 3, **dadurch gekennzeichnet,** daß der eintretende Luftstrom auf die Innenseite der Okularlinse (9) zu umgelenkt wird.

5. Augenmuschel nach Anspruch 1, **dadurch gekennzeichnet,** daß die Augenmuschel (1) relativ zum Okular (3) dreheinstellbar ist.

6. Augenmuschel nach Anspruch 1, **dadurch gekennzeichnet,** daß eine Zwangsbelüftung vorgesehen ist.

7. Augenmuschel nach Anspruch 6, **dadurch gekennzeichnet,** daß die Zwangsbelüftung ein Gebläse oder dergleichen umfaßt.

8. Augenmuschel nach Anspruch 6, **dadurch gekennzeichnet,** daß die Augenmuschel (1) aus einem derart elastischen Material besteht, daß durch Drücken auf die Außenseite der Augenmuschel (1) ein Pumpeffekt bewerkstelligt werden kann.
